# FASCICULE DE BREVET EUROPEEN

(11) **EP 0 942 194 B1**
(45) Date de publication et mention de la délivrance du brevet: **06.08.2003**
(21) Numéro de dépôt: 99400474.5
(22) Date de dépôt: 26.02.1999
(51) Int. Cl.: F16F 9/08, F15B 1/10

(54) **Sphère d'un dispositif de suspension d'un véhicule automobile, intégrant des moyens amortisseurs**
Kugelkörper mit integrierter Dämpfung für die Aufhängungsvorrichtung eines Kraftfahrzeuges
Sphere body with integrated damping means for a vehicle suspension device

(30) Priorité: 13.03.1998 FR 9803144
(43) Date de publication de la demande: 15.09.1999
(73) Titulaire: AUTOMOBILES PEUGEOT, 75116 Paris (FR); AUTOMOBILES CITROEN, 92200 Neuilly-sur-Seine (FR)
(72) Inventeur: Abadie, Vincent, 92700 Colombes (FR); Nouillant, Michel, 33400 Talence (FR); Moreau, Xavier, 33230 Coutras (FR); David, Pascal, Rés. St. Michel Bat A., 33400 Talence (FR); Oustaloup, Alain, 33400 Talence (FR)
(74) Mandataire: Bentz, Jean-Paul

(56) Documents cités:
- WO-A-96/18040
- AT-B- 197 219
- DE-A- 1 927 426
- FR-A- 1 094 549
- FR-A- 1 197 143
- PATENT ABSTRACTS OF JAPAN vol. 010, no. 151 (M-483), 31 mai 1986 & JP 61 006401 A (NOBUYUKI SUGIMURA;OTHERS: 01), 13 janvier 1986
- PATENT ABSTRACTS OF JAPAN vol. 002, no. 036 (M-011), 10 mars 1978 & JP 52 151481 A (HONDA MOTOR CO LTD), 15 décembre 1977

## Description

L'invention concerne une sphère, notamment pneumatique, pour un dispositif de suspension d'un véhicule automobile.

De façon classique, une telle sphère se compose essentiellement d'une enveloppe rigide et d'une membrane souple déformable qui définit une chambre supérieure et une chambre inférieure. La chambre supérieure est destinée à recevoir un gaz sous pression, tandis que la chambre inférieure est généralement remplie d'un liquide et communique avec le vérin de suspension. Une telle sphère est connue du document AT-A-197 219.

Un amortisseur est également placé à l'entrée de la chambre inférieure contenant le liquide.

Les performances d'une telle suspension sont déterminées par la pression de tarage du gaz et les caractéristiques de l'amortisseur. Afin d'améliorer les performances de ces suspensions, on a déjà proposé d'associer plusieurs sphères de caractéristiques différentes ou non.

Cependant, cette solution présente l'inconvénient d'être complexe et coûteuse.

L'invention a pour but de pallier ces inconvénients en proposant une sphère pour la suspension d'un véhicule, dans laquelle sont intégrés les moyens amortisseurs.

Ainsi, les fonctions de ressort et d'amortisseur de la suspension sont remplies par un seul composant. Cette sphère permet d'obtenir des performances qui ne pourraient être obtenues qu'en associant plusieurs sphères et amortisseurs classiques.

Ainsi, l'invention concerne une sphère selon la revendication 1.

De préférence, la structure poreuse présente une forme de demi-sphère creuse, épousant au moins en partie l'enveloppe rigide de la sphère.

Dans une variante de réalisation, la structure poreuse est constituée d'un empilement de billes.

Dans ce cas, on peut prévoir une grille pour retenir les billes qui auraient pu se détacher accidentellement de la structure poreuse.

Dans une autre variante de réalisation, la structure poreuse est constituée d'une mousse à alvéoles ouvertes.

Dans une première variante de réalisation, le fluide élastovisqueux est un mélange d'huile, d'azote et d'un émulsifiant.

Dans une deuxième variante de réalisation, le fluide est un mélange de CO₂ en état supercritique et d'un composé organique lourd dissout.

De façon avantageuse, le volume de la chambre supérieure de la sphère est supérieur à celui de la chambre inférieure.

Dans un mode de réalisation de la sphère, son enveloppe rigide est réalisée en une partie supérieure et une partie inférieure, reliées par une pièce de liaison qui bloque la structure poreuse en position dans la chambre supérieure de la sphère.

De façon préférée, cette pièce de liaison est formée d'une pièce avec la partie inférieure de la sphère.

L'invention sera mieux comprise, et d'autres buts, avantages et caractéristiques de celle-ci apparaîtront plus clairement à la lecture de la description suivante qui est faite en référence aux dessins annexés qui représentent des modes non limitatifs de réalisation de l'invention et sur lesquels :

La figure 1 représente en coupe axiale un premier mode de réalisation de la sphère selon l'invention.

La figure 2 est une vue partielle en coupe axiale d'un deuxième mode de réalisation de la sphère selon l'invention.

Les éléments communs aux deux figures seront désignés par les mêmes repères.

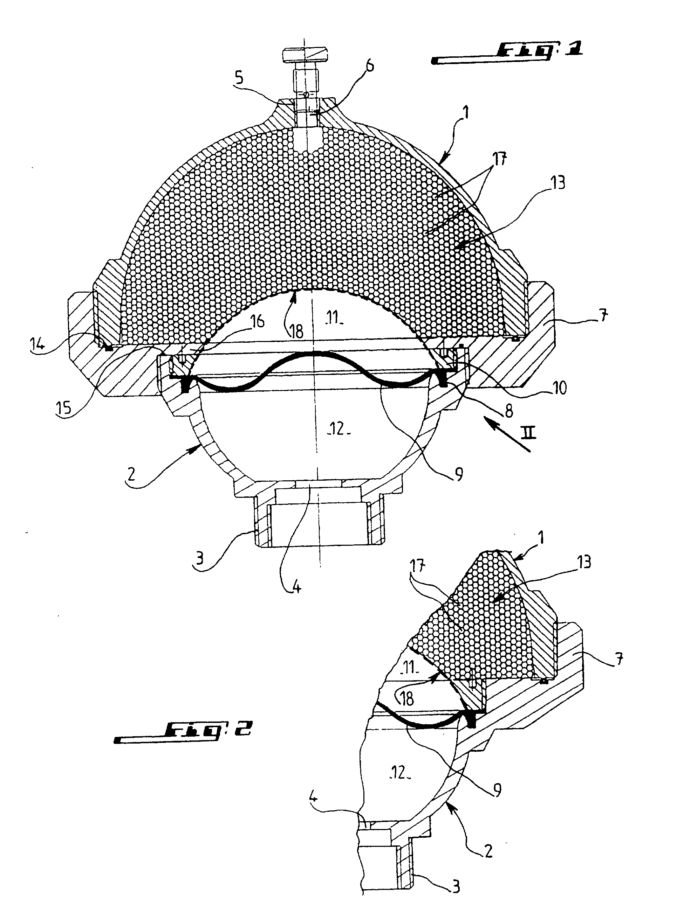

La sphère illustrée à la figure 1 comporte une enveloppe externe, notamment métallique, qui comprend une partie supérieure 1 et une partie inférieure 2.

La partie supérieure et la partie inférieure présentent chacune une forme générale de demi-sphère, le diamètre de la demi-sphère supérieure 1 étant supérieur à celui de la demi-sphère inférieure 2. La partie inférieure 2 est tronquée à sa base pour la fixation de l'embout de raccordement 3 qui permet d'assurer la liaison avec le vérin de suspension. L'embout 3 peut également être intégré à la partie inférieure 2, comme représenté sur les figures.

Ainsi, le liquide de suspension pénètre dans la partie inférieure de la sphère, par l'orifice 4.

La partie supérieure 1 de la sphère comporte, à son sommet, un orifice 5 de remplissage pour un fluide élastovisqueux. Cet orifice peut être obturé par un élément 6 qui est vissé.

La partie supérieure 1 et la partie inférieure 2 de la sphère sont reliées par l'intermédiaire d'une pièce de liaison 7.

La demi-sphère inférieure 2 comporte, sur son bord supérieur, une gorge 8 destinée à recevoir le bord périphérique d'une membrane 9. La membrane 9 est maintenue dans la gorge 8 grâce à un écrou de serrage 10.

Ainsi, la membrane 9 définit une chambre supérieure 11 et une chambre inférieure 12. La membrane 9 est souple et déformable, elle peut donc prendre des positions différentes à l'intérieur de la sphère, notamment en fonction de la pression du fluide de suspension présent dans la chambre inférieure 12.

Dans la chambre supérieure 11 de la sphère est placée une structure poreuse 13. Cette structure 13 présente la forme d'une demi-sphère creuse, définie par un rayon intérieur et un rayon extérieur. Ce rayon extérieur correspond sensiblement au rayon intérieur de la partie supérieure 1 de la sphère. La structure 13 épouse donc au moins en partie l'enveloppe rigide.

Par ailleurs, la chambre supérieure 11 est remplie d'un fluide élastovisqueux qui imprègne la structure poreuse 13.

La pièce de liaison 7 assure également l'étanchéité entre la chambre supérieure et l'extérieur de la sphère. Cette étanchéité est obtenue par l'intermédiaire de joints 14 et 15 qui sont respectivement situés entre la pièce 7 et la partie supérieure 1 de la sphère et entre la pièce 7 et la partie inférieure 2 de la sphère. Le fluide élastovisqueux est ainsi maintenu dans la chambre supérieure 11 de la sphère.

La pièce de liaison 7 comporte une partie annulaire 16 qui permet d'assurer le blocage de la structure poreuse 13 dans la chambre supérieure 11.

De préférence, l'évidement de l'écrou de serrage 10 définit une portion de sphère dont le rayon est sensiblement identique au rayon intérieur de la structure poreuse 13. Ainsi, la membrane 9 peut venir s'appliquer sur la structure poreuse 13 sans discontinuité de forme.

La structure poreuse 13 peut être caractérisée par des volumes ou lacunes connectés entre eux par des orifices. Les volumes ou lacunes remplis de fluide élastovisqueux ont un rôle élastique tel un ressort à gaz, tandis que les orifices de communication entre les volumes ou lacunes de la structure poreuse ont un rôle dissipatif lié à la perte de charge.

Cette structure poreuse peut notamment être réalisée sous la forme d'un empilement de billes 17 entre lesquelles peut circuler le fluide élasto-visqueux. Cet empilement peut être ou non régulier.

Les billes sont en métal ou en plastique et elles sont liées entre elles par collage ou soudage, par exemple. De préférence, la disposition des billes est choisie de façon à ce que la structure soit la plus compacte possible. Avantageusement, on peut prévoir une grille 18 pour retenir les billes qui auraient pu se détacher accidentellement de la structure poreuse 13.

Dans une telle structure poreuse, les volumes ou lacunes sont définis par les espaces existant entre au moins quatre billes en contact. Tout passage du fluide élastovisqueux entre trois billes en contact constitue une perte de charge ou une résistance hydraulique de passage d'une lacune à l'autre.

La structure poreuse 13 peut également être réalisée à base de mousse à alvéoles ouvertes.

Le fluide élastovisqueux qui imprègne la structure poreuse peut notamment être un mélange d'huile, d'azote et d'un émulsifiant, afin de maintenir une phase homogène dans la chambre supérieure 11 de la sphère.

Ce fluide élastoviqueux peut également être constitué par du CO₂ en état supercritique, utilisé à la fois en tant que fluide compressible et solvant d'un composant organique lourd, comme de l'huile silicone, afin de conférer au mélange les propriétés viscoélastiques requises.

La figure 2 représente une variante de réalisation de la sphère selon l'invention, dans laquelle la pièce 7 fait partie intégrante de la partie inférieure 2 de la sphère.

Il a été mis en évidence que la différence de pression entre les deux chambres de la sphère varie proportionnellement à une dérivée temporelle non entière du volume de fluide de suspension présent dans la chambre inférieure.

L'ordre de cette dérivée dépend des caractéristiques du fluide élastovisqueux et de la structure poreuse et notamment du diamètre des billes ou des alvéoles, de la porosité globale de la structure ou encore du rapport entre le rayon extérieur et le rayon intérieur de la structure.

De préférence, l'ordre de cette dérivée est compris entre 0 et 1.

Les caractéristiques de la structure et du fluide élastovisqueux sont choisies en fonction de l'ordre de grandeur qui est choisi pour l'ordre de dérivation.

Par exemple, plus le diamètre des billes est important, plus l'ordre de dérivation est proche de 0.

Parallèlement, plus le diamètre des billes est faible, plus l'ordre de dérivation est proche de 1.

On a également constaté que, plus le liquide présent dans la chambre supérieure de la sphère est visqueux, plus l'ordre de dérivation est proche de 1. Parallèlement, moins le liquide est visqueux, plus l'ordre de dérivation est proche de 0.

De même, plus le liquide est compressible, plus l'ordre de dérivation est proche de 0. Parallèlement, moins le liquide est compressible, plus l'ordre de dérivation est proche de 1.

Or, il est déjà connu qu'on améliore sensiblement les caractéristiques d'amortissement d'une suspension en les faisant varier de façon continue. On peut notamment se référer au brevet FR-2 733 564.

De plus, cette variation en continu est réalisée en fonction d'une dérivée temporelle d'ordre non entier du débattement, c'est-à-dire de la distance entre la roue et la caisse. On peut à cet égard se référer au brevet FR-2 660 386.

Ainsi, la structure poreuse présente dans la chambre supérieure de la sphère selon l'invention constitue des moyens d'amortissement. Lorsque la sphère selon l'invention est utilisée dans une suspension de véhicule automobile, il n'est donc pas nécessaire que cette suspension comporte des moyens amortisseurs indépendants.

En conséquence, contrairement aux sphères classiques, la partie inférieure de la sphère selon l'invention est directement reliée au vérin de suspension. Ainsi, la pénétration du liquide de suspension dans la chambre inférieure de la sphère est réalisée sans perte de charges.

Par ailleurs, dans le document FR-2 733 564, un pilotage des moyens d'amortissement est nécessaire pour faire varier en continu leurs caractéristiques. Ce pilotage s'effectue par des moyens spécifiques (électroaimant, capteurs ...) qui compliquent la réalisation des amortisseurs et qui présentent une inertie.

Dans la sphère selon l'invention, cette variation en continu des caractéristiques d'amortissement s'effectue automatiquement, sans moyens additionnels, grâce aux caractéristiques du fluide élastovisqueux et de la structure poreuse.

Ainsi, grâce à la présence de la structure poreuse, la sphère selon l'invention joue le rôle d'un amortisseur dont les caractéristiques varient en continu et automatiquement, et elle définit également les caractéristiques de raideur de la suspension. Dans une sphère classique, ces caractéristiques résultent de la pression de tarage du gaz présent dans la chambre supérieure.

Il est cependant possible de prévoir un amortisseur en entrée de la chambre inférieure de la sphère selon l'invention, notamment pour ajuster de façon plus fine les caractéristiques d'amortissement.

La relation entre la différence de pression entre les deux chambres de la sphère et la dérivée d'ordre non entier du volume de fluide de suspension dans la chambre inférieure est valable dans une plage déterminée de fréquences du débattement.

Pour la sphère selon l'invention, cette plage est généralement comprise au moins entre 0 et 100 Hz.

Enfin, à titre d'exemple, la sphère selon l'invention peut présenter les caractéristiques suivantes.

Le volume de la chambre supérieure de la sphère est d'environ 450 cm³ et le volume de la chambre inférieure est d'environ 50 cm³.

La structure poreuse est réalisée avec des billes soudées, dont le diamètre est de 1 mm. L'empilement est compact, les billes étant en contact 3 par 3. La structure occupe un volume d'environ 400 cm³ dans la chambre supérieure.

Le fluide viscoélastique est un mélange d'huile, d'azote et d'un émulsifiant ou encore un mélange de CO₂ en état supercritique et d'un composé organique lourd dissout.

Avec une telle sphère, la différence de pression entre les deux chambres est la dérivée d'ordre compris entre 0,7 et 0,8 du volume de fluide de suspension présent dans la chambre inférieure.

Les signes de référence insérés après les caractéristiques techniques figurant dans les revendications ont pour seul but de faciliter la compréhension de ces dernières et ne sauraient en limiter la portée.

## Revendications

1. Sphère, notamment pneumatique, pour un dispositif de suspension d'un véhicule automobile, cette sphère comprenant une enveloppe rigide, une membrane (9) souple déformable, disposée à l'intérieur de cette enveloppe pour définir une chambre supérieure (11) et une chambre inférieure (12), et des moyens d'amortissement de la suspension qui sont intégrés dans ladite chambre supérieure (11) de la sphère, lesdits moyens d'amortissement comprenant une structure poreuse (13), **caractérisée en ce que** la chambre supérieure (11) contient un fluide élastovisqueux qui imprègne ladite structure.

2. Sphère selon la revendication 1, **caractérisée en ce que** ladite structure poreuse (13) présente une forme de demi-sphère creuse épousant au moins en partie l'enveloppe rigide de la sphère.

3. Sphère selon la revendication 1 ou 2, **caractérisée en ce que** ladite structure poreuse (13) est constituée d'un empilement de billes (17).

4. Sphère selon la revendication 3, **caractérisée en ce qu'**elle comporte une grille (18) pour retenir les billes qui auraient pu se détacher accidentellement de la structure poreuse (13).

5. Sphère selon la revendication 1 ou 2, **caractérisée en ce que** ladite structure poreuse est constituée d'une mousse à alvéoles ouvertes.

6. Sphère selon l'une des revendications 1 à 5, **caractérisée en ce que** ledit fluide élastovisqueux est un mélange d'huile, d'azote et d'un émulsifiant.

7. Sphère selon l'une des revendications 2 à 5, **caractérisée en ce que** ledit fluide élastovisqueux est un mélange de CO₂ en état supercritique et d'un composé organique lourd dissout.

8. Sphère selon l'une des revendications 1 à 7, **caractérisée en ce que** le volume de la chambre supérieure (11) est supérieur à celui de la chambre inférieure (12).

9. Sphère selon l'une des revendications 1 à 8, **caractérisée en ce que** son enveloppe rigide est réalisée en une partie supérieure (1) et une partie inférieure (2), reliées par une pièce de liaison (7) qui bloque la structure poreuse en position dans la chambre supérieure (11) de la sphère.

10. Sphère selon la revendication 9, **caractérisée en ce que** ladite pièce de liaison (7) est formée d'une pièce avec la partie inférieure (2) de la sphère.

## Patentansprüche

1. Insbesondere pneumatische Sphäre, für eine Aufhängevorrichtung eines Kraftfahrzeugs, wobei diese Sphäre ein starres Gehäuse, eine elastische, verformbare Membran (9), die im Inneren dieses Gehäuses angeordnet ist um eine obere Kammer (11) und eine untere Kammer (12) zu definieren und Aufhängungsdämpfungsmittel, die in die genannte obere Kammer (11) der Sphäre integriert sind umfaßt, wobei die genannten Dämpfungsmittel eine poröse Struktur (13) umfassen
**dadurch gekennzeichnet dass**,
die obere Kammer (11) ein elastoviskoses Fluid aufnimmt, das die genannte Struktur durchsetzt.

2. Sphäre nach Anspruch 1, **dadurch gekennzeichnet, daß** die genannte poröse Struktur (13) eine Form einer Halbhohlkugel aufweist, die sich wenigstens zum Teil dem starren Gehäuse der Sphäre anpaßt.

3. Sphäre nach Anspruch 1 oder 2, **dadurch gekennzeichnet, daß** die genannte poröse Struktur (13) aus einer Anhäufung von Kugeln (17) gebildet ist.

4. Sphäre nach Anspruch 3, **dadurch gekennzeichnet, daß** sie ein Gitter (18) umfaßt, um die Kugeln zu halten, die sich zufällig von der porösen Struktur (13) hätten absondern können.

5. Sphäre nach Anspruch 1 oder 2, **dadurch gekennzeichnet, daß** die genannte poröse Struktur aus einem offenzelligen Schaum gebildet ist.

6. Sphäre nach einem der Ansprüche 1 bis 5, **dadurch gekennzeichnet, daß** das genannte elastoviskose Fluid ein Gemisch aus Öl, Stickstoff und einem Emulgator ist.

7. Sphäre nach einem der Ansprüche 2 bis 5, **dadurch gekennzeichnet, daß** das genannte elastoviskose Fluid ein Gemisch aus CO ₂ in superkritischem Zustand und einer grob gelösten organischen Verbindung ist.

8. Sphäre nach einem der Ansprüche 1 bis 7, **dadurch gekennzeichnet, daß** das Volumen der oberen Kammer (11) größer ist, als dasjenige der unteren Kammer (12).

9. Sphäre nach einem der Ansprüche 1 bis 8, **dadurch gekennzeichnet, daß** ihr starres Gehäuse mit einem oberen Teil (1) und einem unteren Teil (2) hergestellt ist, verbunden durch ein Verbindungsstück (7), das die poröse Struktur in Position in der oberen Kammer (11) der Sphäre blockiert.

10. Sphäre nach Anspruch 9,**dadurch gekennzeichnet, daß** das genannte Verbindungsstück (7) aus einem Stück mit dem unteren Teil (2) der Sphäre hergestellt ist.

## Claims

1. Sphere body, especially a pneumatic one, for a motor vehicle suspension device, said sphere body comprising a rigid envelope, a deformable non-rigid diaphragm (9) arranged inside said envelope so as to define an upper chamber (11) and a lower chamber (12), and means for damping the suspension which are integrated in said upper chamber (11) of the sphere body, said damping means comprising a porous structure (13), **characterised in that** the upper chamber (11) contains a viscoelastic fluid which impregnates said structure.

2. Sphere body according to claim 1, **characterised in that** said porous structure (13) has the shape of a hollow hemisphere which at least in part hugs the rigid envelope of the sphere body.

3. Sphere body according to claim 1 or 2, **characterised in that** said porous structure (13) is constituted by an arrangement of stacked balls (17).

4. Sphere body according to claim 3, **characterised in that** it has a mesh (18) for holding back any balls that may accidentally detach themselves from the porous structure (13).

5. Sphere body according to claim 1 or 2, **characterised in that** said porous structure is constituted by a open-celled material.

6. Sphere body according to any of claims 1 to 5, **characterised in that** said viscoelastic fluid is a mixture of oil, nitrogen and an emulsifier.

7. Sphere body according to any of claims 2 to 5, **characterised in that** said viscoelastic fluid is a mixture of supercritical CO₂ and a dissolved heavy organic compound.

8. Sphere body according to any of claims 1 to 7, **characterised in that** the volume of the upper chamber (11) is greater than that of the lower chamber (12).

9. Sphere body according to any of claims 1 to 8, **characterised in that** its rigid envelope is made up of an upper portion (1) and a lower portion (2), joined by a connector (7) which locks the porous structure in position in the upper chamber (11) of the sphere.

10. Sphere body according to claim 9, **characterised in that** said connector (7) is integrally formed with the lower portion (2) of the sphere body.
